# EUROPÄISCHE PATENTANMELDUNG

(11) **EP 1 986 280 A2**
(43) Veröffentlichungstag der Anmeldung: **29.10.2008**
(21) Anmeldenummer: 08006941.2
(22) Anmeldetag: 08.04.2008
(51) Int. Cl.: H01R 13/518, G02B 6/38

(54) **Vorrichtung zur Aufnahme von Steckverbindungen**

(30) Priorität: 23.04.2007 DE 202007005870 U
(71) Anmelder: CCS Technology, Inc., Wilmington, DE 19803 (US)
(72) Erfinder: Froehlich, Franz-Friedrich, Dipl.-Ing,, 58091 Hagen (DE); Fabrykowski, Grzegorz, 95-010 Stryków (PL)
(74) Vertreter: Sturm, Christoph

(57) **Zusammenfassung**

Die Erfindung betrifft eine Vorrichtung zur Aufnahme von Steckverbindungen, insbesondere von Glasfasersteckverbindungen, mit mindestens zwei Aufnahmeelementen (12, 13) zur Aufnahme von jeweils mehreren Steckverbindungen (11), wobei benachbarte Aufnahmeelemente (12, 13) derart gelenkig miteinander verbunden sind, dass ein Aufnahmeelement (13) zusammen mit den in demselben aufgenommenen Steckverbindungen (11) gegenüber einem benachbarten Aufnahmeelement (12) und den in demselben aufgenommenen Steckverbindungen (11) derart schwenkbar ist, dass ein Abstand zwischen den Aufnahmeelementen veränderbar ist.

## Beschreibung

Die Erfindung betrifft eine Vorrichtung zur Aufnahme von Steckverbindungen.

Zur Realisierung der Anforderung, immer größere Packungsdichten in Verteilereinrichtungen von Telekommunikationsanlagen, wie z. B. in Lichtwellenleiterverteilereinrichtungen, bereitzustellen, ist es erforderlich, auf einem immer enger werdenden Raum eine immer größer werdende Anzahl an Verbindungen, insbesondere Steckverbindungen, zwischen Nachrichtendatenleitern, insbesondere Lichtwellenleitern, handzuhaben. Dabei ist einerseits eine möglichst schonende Handhabung der Nachrichtendatenleiter sowie der Steckverbindungen unter Einhaltung zulässiger Biegeradien erforderlich, andererseits dürfen dann, wenn an einer Steckverbindung Arbeiten ausgeführt werden, die anderen Steckverbindungen nicht beeinflusst werden.

Bislang sind aus dem Stand der Technik keine Vorrichtungen bekannt, mit denen Steckverbindungen auf engstem Raum unter Realisierung hoher Packungsdichten schonend unter Gewährleistung eines Einzelzugriffs auf die Steckverbindungen gehandhabt werden können.

Hiervon ausgehend liegt der vorliegenden Erfindung das Problem zu Grunde, eine neuartige Vorrichtung zur Aufnahme von Steckverbindungen zu schaffen.

Dieses Problem wird durch eine Vorrichtung zur Aufnahme von Steckverbindungen gemäß Anspruch 1 gelöst.

Die erfindungsgemäße Vorrichtung umfasst mindestens zwei Aufnahmeelemente zur Aufnahme von jeweils mehreren Steckverbindungen, wobei benachbarte Aufnahmeelemente derart gelenkig miteinander verbunden sind, dass ein Aufnahmeelement zusammen mit den in demselben aufgenommenen Steckverbindungen gegenüber einem benachbarten Aufnahmeelement und den in demselben aufgenommenen Steckverbindungen derart schwenkbar ist, dass ein Abstand zwischen den Aufnahmeelementen veränderbar ist.

Mit der erfindungsgemäßen Vorrichtung können Steckverbindungen in mehreren Aufnahmeelementen abgelegt werden, wobei die Aufnahmeelemente gelenkig miteinander verbunden und relativ zueinander schwenkbar sind. Hierdurch ist es möglich, den Abstand zwischen den Aufnahmeelementen für die Steckverbinder zu verändern und ein Aufnahmeelement relativ zu dem oder jedem anderen Aufnahmeelement zu verlagern, dass ein ungestörter Zugriff auf die in diesem Aufnahmeelement aufgenommenen Steckverbindungen möglich ist. Die erfindungsgemäße Vorrichtung ermöglicht demnach eine Realisierung hoher Packungsdichten von Steckverbindungen bei einer schonenden Handhabung derselben sowie gleichzeitiger Gewährleistung eines Einzelzugriffs auf eine Steckverbindung ohne andere Steckverbindungen zu beeinträchtigen.

Bevorzugte Weiterbildungen der Erfindung ergeben sich aus den Unteransprüchen und der nachfolgenden Beschreibung. Ein Ausführungsbeispiel wird anhand der Zeichnung näher erläutert. In der Zeichnung zeigt:
- Fig. 1: eine erfindungsgemäße Vorrichtung zur Aufnahme von Steckverbindungen zusammen mit aufgenommenen Steckverbindungen in einer Draufsicht;
- Fig. 2: die Anordnung der Fig. 1 in einer Seitenansicht;
- Fig. 3: die Anordnung der Fig. 1 in einer perspektivischen Ansicht;
- Fig. 4: die Anordnung der Fig. 1 in einer weiteren perspektivischen Ansicht;
- Fig. 5: die Anordnung der Fig. 1 in einer gegenüber Fig. 2 um 90° gedrehten Seitenansicht; und
- Fig. 6: die erfindungsgemäße Vorrichtung zur Aufnahme von Steckverbindungen ohne die aufgenommenen Steckverbindungen in einer perspektivischen Ansicht.

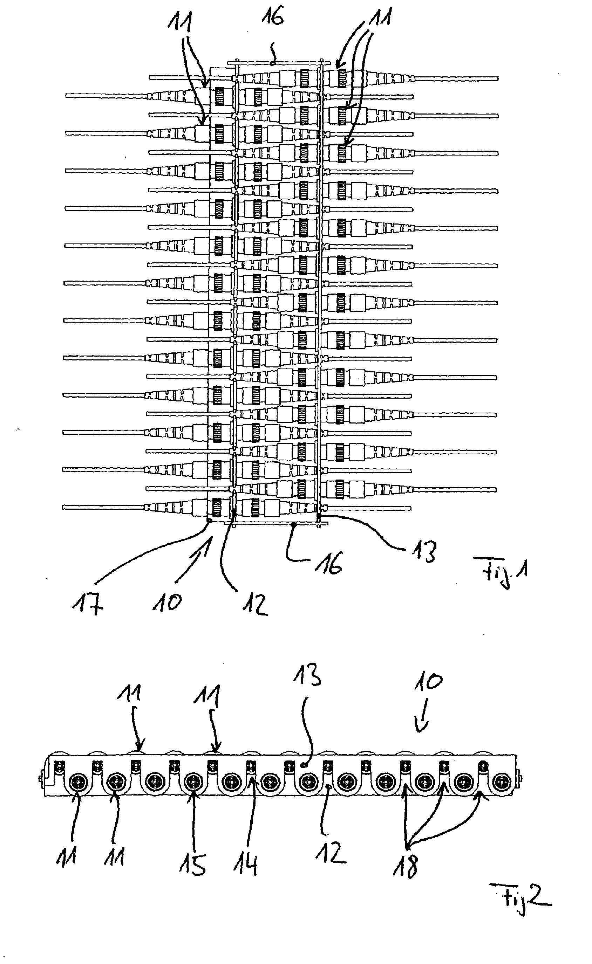

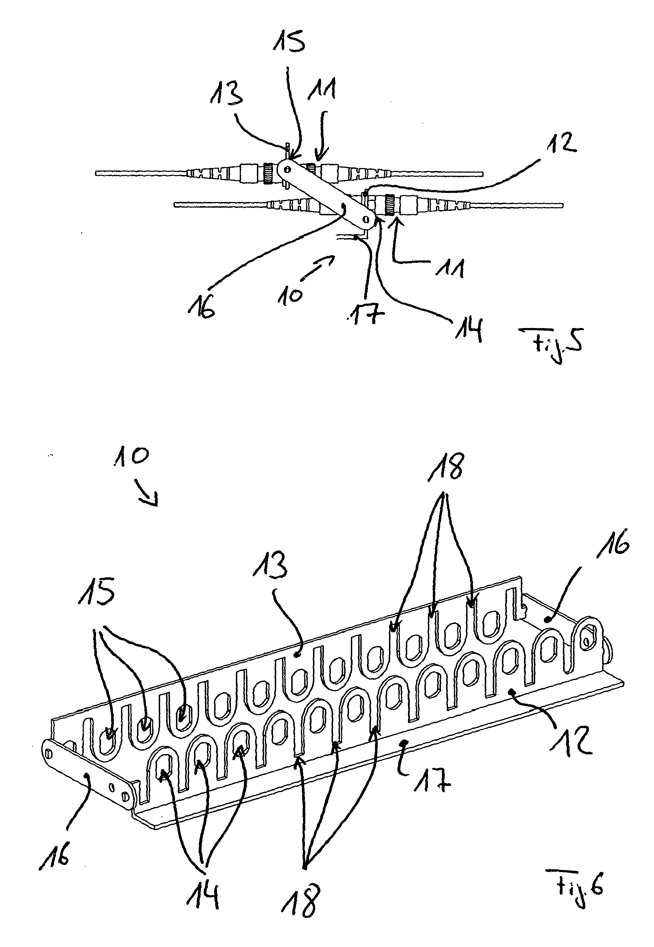

Fig. 1 bis 6 zeigen unterschiedliche Ansichten einer erfindungsgemäßen Vorrichtung 10 zur Aufnahme von Steckverbindungen, wobei Fig. 1 bis 5 die Vorrichtung 10 zusammen mit in derselben aufgenommenen Steckverbindungen 11 zeigen, wohingegen Fig. 6 die Vorrichtung ohne Steckverbindungen zeigt.

Im gezeigten Ausführungsbeispiel umfasst die erfindungsgemäße Vorrichtung 10 zur Aufnahme von Steckverbindungen zwei Aufnahmeelemente 12, 13 zur Aufnahme von jeweils mehreren Steckverbindungen. Jedes der beiden Aufnahmeelemente 12, 13 verfügt über mehrere in einer Reihe nebeneinander angeordnete Aufnahmepositionen 14 bzw. 15 für jeweils eine Steckverbindung 11. Im gezeigten Ausführungsbeispiel weist das Aufnahmeelement 12 insgesamt zwölf in einer Reihe nebeneinander angeordnete Aufnahmepositionen 14 und das Aufnahmeelement 13 ebenfalls zwölf in einer Reihe nebeneinander angeordnete Aufnahmepositionen 15 auf, so dass mit der gezeigten Vorrichtung 10 insgesamt vierundzwanzig Steckverbindungen gehandhabt werden können.

Die beiden Aufnahmeelemente 12, 13 sind gelenkig miteinander verbunden, und zwar gemäß Fig. 6 über zwei Schenkel 16, die zu beiden Seiten der Aufnahmeelemente 12, 13 an denselben angreifen. Bedingt durch die gelenkige Verbindung der Aufnahmeelemente 12, 13 über die Schenkel 16 können die Aufnahmeelemente 12, 13 zusammen mit den in denselben aufgenommenen Steckverbindungen 11 relativ zueinander verschwenkt werden, um so den vertikalen Abstand sowie horizontalen Abstand zwischen den Aufnahmeelementen 12, 13 sowie den in diesen aufgenommenen Steckverbindungen 11 zu verändern. Abhängig von der Relativposition ist dabei entweder ein Zugriff auf die im Aufnahmeelement 12 aufgenommenen Steckverbindungen 11 oder auf die im Aufnahmeelement 13 aufgenommenen Steckverbindungen 11 möglich.

Im gezeigten Ausführungsbeispiel ist das Aufnahmeelement 12, welches die in einer Reihe nebeneinander angeordneten Aufnahmepositionen 14 aufweist, über eine abgewinkelte Lasche 17 mit einer Bodenwand einer nichtdargestellten Verteilereinrichtung fest verbindbar. Das die Aufnahmepositionen 15 aufweisende Aufnahmeelement 13 ist über die Schenkel 16 an dem Aufnahmeelement 12 gelenkig bzw. schwenkbar gelagert, um dasselbe in unterschiedliche Relativpositionen zum Aufnahmeelement 12 zu überführen. Beim Verschwenken der Aufnahmeelemente 12, 13 relativ zueinander verändert sich der vertikale Abstand sowie der horizontale Abstand zwischen denselben, wobei abhängig von der Relativposition der Zugriff auf die in einer der beiden Aufnahmeelemente 12, 13 aufgenommenen Steckverbindungen 11 möglich ist.

In einer ersten Relativposition des Aufnahmeelements 13 zum Aufnahmeelement 12 (siehe Fig. 1, 2, 4 und 6) ist der horizontale Abstand zwischen den beiden Aufnahmeelementen 12, 13 maximiert und der vertikale Abstand zwischen denselben minimiert. In dieser ersten Relativposition ist ein Zugriff auf die im Aufnahmeelement 12 aufgenommenen Steckverbindungen 11 möglich.

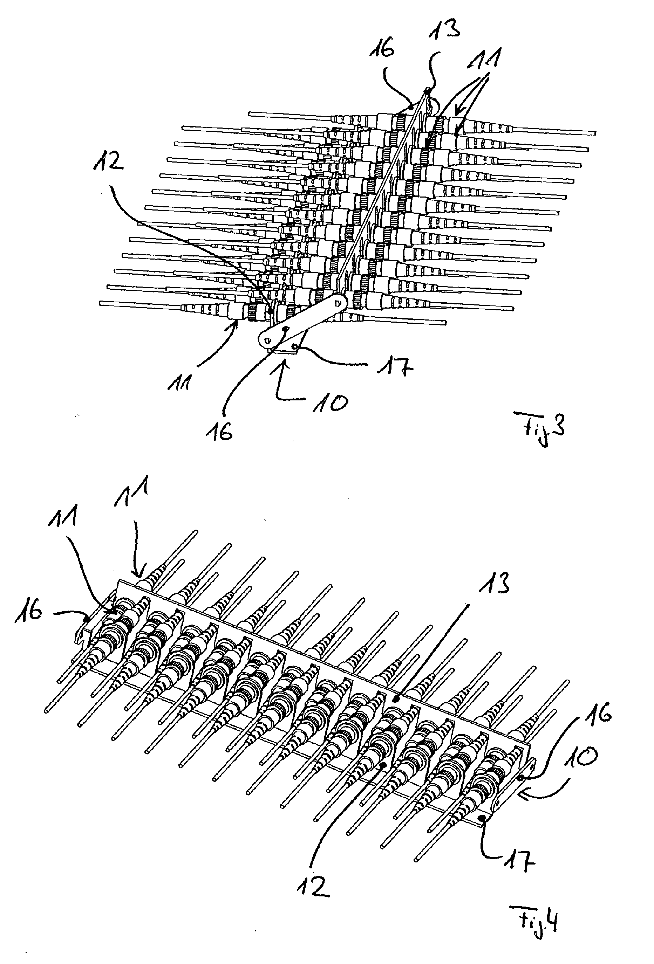

In einer zweiten Relativposition des Aufnahmeelements 13 relativ zum Aufnahmeelement 12 (siehe Fig. 3 und 5) ist der horizontale Abstand zwischen den Aufnahmeelementen 12, 13 verkleinert und der vertikale Abstand zwischen denselben vergrößert, wobei dann in der zweiten Relativposition der Zugriff auf die in dem Aufnahmeelement 13 aufgenommenen Steckverbindungen 11 möglich ist.

In der ersten Relativposition ist der Zugriff auf die in der Aufnahmeeinrichtung 12 aufgenommenen Steckverbindungen 11 im Sinne eines Einzelzugriffs möglich, so dass bei Zugriff auf eine Steckverbindung 11, die im Aufnahmeelement 12 aufgenommen ist, weder die anderen im Aufnahmeelement 12 aufgenommenen Steckverbindungen noch die im Aufnahmeelement 13 aufgenommenen Steckverbindungen 11 beeinträchtigt bzw. unterbrochen werden.

In der zweiten Relativposition ist ein Zugriff auf die im Aufnahmeelement 13 aufgenommenen Steckverbindungen 11 im Sinne eines Einzelzugriffs möglich, was bedeutet, dass dann, wenn auf eine einzelne in der Aufnahmeeinrichtung 13 aufgenommene Steckverbindung 11 zugegriffen wird, weder die anderen im Aufnahmeelement 13 aufgenommenen Steckverbindungen noch die im Aufnahmeelement 12 aufgenommenen Steckverbindungen beeinträchtigt bzw. unterbrochen werden.

Wie bereits ausgeführt, sind sowohl die Aufnahmepositionen 14 des Aufnahmeelements 12 als auch die Aufnahmepositionen 15 des Aufnahmeelements 13 jeweils in einer Reihe nebeneinander positioniert. Dabei sind die Aufnahmepositionen 14, 15 der beiden Aufnahmeelemente 12, 13 versetzt zueinander angeordnet.

In vertikaler Blickrichtung gesehen (siehe insbesondere Fig. 1) sind dabei die Aufnahmepositionen 14, 15 der beiden Aufnahmeelemente 12, 13 derart zueinander versetzt, dass in etwa in der Mitte zwischen unmittelbar nebeneinander liegenden Aufnahmepositionen 14 des Aufnahmeelements 12 jeweils eine Aufnahmeposition 15 des Aufnahmeelements 13 angeordnet ist. Ebenso ist in etwa in der Mitte zwischen unmittelbar nebeneinander liegenden Aufnahmepositionen 15 des Aufnahmeelements 13 jeweils eine Aufnahmeposition 14 des Aufnahmeelements 12 angeordnet. Durch diesen Versatz der Aufnahmepositionen 14, 15 in horizontaler Richtung können gemäß Fig. 1 die einzelnen Steckverbindungen 11 besonders platzsparend in der Vorrichtung 10 aufgenommen werden.

Weiterhin sind die Aufnahmepositionen 14, 15 der beiden Aufnahmeelemente 12, 13 derart versetzt zueinander angeordnet, dass in horizontaler Blickrichtung gesehen (siehe insbesondere Fig. 2, 5) in beiden Relativpositionen der Aufnahmeelemente 12, 13 relativ zueinander die Aufnahmepositionen 14, 15 der Aufnahmeelemente 12, 13 vertikal voneinander beabstandet sind.

So sind in der Relativposition zwischen den beiden Aufnahmeelementen 12, 13, in welcher der horizontale Abstand zwischen denselben maximiert und der vertikale Abstand zwischen denselben minimiert ist (siehe Fig. 1, 2, 4 und 6), die Aufnahmepositionen 14 des Aufnahmeelements 12 oberhalb der Aufnahmepositionen 15 des Aufnahmeelements 13 angeordnet, so dass in dieser Relativposition ein Zugriff auf die in dem Aufnahmeelement 12 aufgenommenen Steckverbindungen 11 möglich ist. In der anderen Relativposition hingegen, in welcher der horizontale Abstand zwischen den Aufnahmeelementen 12, 13 verkleinert und der vertikale Abstand zwischen denselben vergrößert ist (siehe Fig. 3 und 5), sind die Aufnahmepositionen 15 des Aufnahmeelements 13 oberhalb der Aufnahmepositionen 14 des Aufnahmeelements 12 positioniert, so dass dann ein Zugriff auf die im Aufnahmeelement 13 aufgenommenen Steckverbindungen 11 möglich ist.

Wie insbesondere Fig. 6 entnommen werden kann, sind in beide Aufnahmeelemente 12, 13 jeweils zwischen benachbarten Aufnahmepositionen 14 bzw. 15 schlitzartige Ausnehmungen 18 eingebracht. Durch die Ausnehmungen 18 können Kabel geführt werden, die zu den einzelnen Steckverbindungen führen. So dienen die in das Aufnahmeelement 12 eingebrachten, schlitzartigen Ausnehmungen 18 der Führung von Kabeln, die zu den im Aufnahmeelement 13 aufgenommenen Steckverbindungen 11 führen. Die in das Aufnahmeelement 13 eingebrachten, schlitzartigen Ausnehmungen 18 dienen hingegen der Führung von Kabeln, die zu den im Aufnahmeelement 12 aufgenommenen Steckverbindungen 11 führen.

Die erfindungsgemäße Vorrichtung 10 ermöglicht eine platzsparende Anordnung von Steckverbindern und damit eine hohe Packungsdichte bei schonender Handhabung derselben und bei Gewährleistung eines Einzelzugriffs auf alle aufgenommenen Steckverbindungen. Die erfindungsgemäße Vorrichtung ist insbesondere dann vorteilhaft, wenn zum Öffnen und Schließen der Steckverbindungen viel Platz benötigt wird, wie dies bei zu verschraubenden Steckverbindungen gemäß der FC-Steckertechnik erforderlich ist.

Die schlitzartigen Ausnehmungen 18 der beiden Aufnahmeelemente 12, 13 sind von unterschiedlichen Richtungen aus in dieselben eingebracht. So zeigt insbesondere Fig. 6, dass die schlitzartigen Ausnehmungen 18 des Aufnahmeelements 12 von oben in dasselbe eingebracht sind und die schlitzartigen Ausnehmungen 18 des Aufnahmeelements 13 von unten in dasselbe eingebracht sind, so dass die schlitzartigen Ausnehmungen 18 des Aufnahmeelements 12 oben offen und die schlitzartigen Ausnehmungen 18 des Aufnahmeelements 13 unten offen sind. Hierdurch ist gewährleistet, dass bei dem Verschwenken der Aufnahmeelemente 12, 13 relativ zueinander die zu den Steckverbindungen 11 führenden Kabel in die schlitzartigen Ausnehmungen 18 eingeführt bzw. aus denselben ausgeführt werden können, und zwar abhängig von der Schwenkrichtung des Aufnahmeelements 13 relativ zum Aufnahmeelement 12.

### Bezugszeichenliste

- 10: Vorrichtung
- 11: Steckverbindung
- 12: Aufnahmeelement
- 13: Aufnahmeelement
- 14: Aufnahmeposition
- 15: Aufnahmeposition
- 16: Schenkel
- 17: Lasche
- 18: Ausnehmung

## Patentansprüche

1. Vorrichtung zur Aufnahme von Steckverbindungen, insbesondere von Lichtwellenleitersteckverbindungen, mit mindestens zwei Aufnahmeelementen (12, 13) zur Aufnahme von jeweils mehreren Steckverbindungen (11), wobei benachbarte Aufnahmeelemente (12, 13) derart gelenkig miteinander verbunden sind, dass ein Aufnahmeelement (13) zusammen mit den in demselben aufgenommenen Steckverbindungen (11) gegenüber einem benachbarten Aufnahmeelement (12) und den in demselben aufgenommenen Steckverbindungen (11) derart schwenkbar ist, dass ein Abstand zwischen den Aufnahmeelementen veränderbar ist.

2. Vorrichtung nach Anspruch 1, **dadurch gekennzeichnet, dass** ein erstes Aufnahmeelement (12), welches mehrere in einer Reihe nebeneinander angeordnete Aufnahmepositionen (14) für Steckverbindungen aufweist, mit einer Bodenwand einer Verteilereinrichtung fest verbindbar ist, und dass ein zweites Aufnahmeelement (13), welches ebenfalls mehrere in einer Reihe nebeneinander angeordnete Aufnahmepositionen (15) für Steckverbindung aufweist, über Schenkel (16) derart schwenkbar mit dem ersten Aufnahmeelement (12) verbunden ist, dass das zweite Aufnahmeelement (13) von einer ersten Relativposition, in welcher ein horizontaler Abstand zum ersten Aufnahmeelement maximiert und ein vertikaler Abstand zum ersten Aufnahmeelement minimiert ist, unter Verringerung des horizontalen Abstands und unter Vergrößerung des vertikalen Abstands in eine zweite Relativposition schwenkbar ist.

3. Vorrichtung nach Anspruch 2, **dadurch gekennzeichnet, dass** in der ersten Relativposition ein Zugriff auf die Steckverbindungen des ersten Aufnahmeelements und in der zweiten Relativposition ein Zugriff auf die Steckverbindungen des zweiten Aufnahmeelements möglich ist, ohne jeweils die in dem anderen Aufnahmeelement aufgenommenen Steckverbindungen zu beeinträchtigen bzw. zu unterbrechen.

4. Vorrichtung nach Anspruch 2 oder 3, **dadurch gekennzeichnet, dass** die Aufnahmepositionen (14, 15) in den beiden Aufnahmeelementen (12, 13) versetzt zueinander angeordnet sind, nämlich derart, in vertikaler Blickrichtung gesehen in etwa in der Mitte zwischen unmittelbar nebeneinliegenden Aufnahmepositionen (14; 15) eines Aufnahmeelements (12; 13) jeweils eine Aufnahmepositionen (15; 14) des anderen Aufnahmeelements (13; 12) angeordnet ist.

5. Vorrichtung nach einem der Ansprüche 2 bis 4, **dadurch gekennzeichnet, dass** die Aufnahmepositionen (14, 15) in den beiden Aufnahmeelementen (12, 13) versetzt zueinander angeordnet sind, nämlich derart, in horizontaler Blickrichtung gesehen sowohl in der ersten Relativposition als auch in der zweiten Relativposition die Aufnahmepositionen der beiden Aufnahmeelemente vertikal voneinander beabstandet sind.

6. Vorrichtung nach Anspruch 5, **dadurch gekennzeichnet, dass** in der ersten Relativposition die Aufnahmepositionen (15) des zweiten Aufnahmeelements unterhalb der Aufnahmepositionen (14) des ersten Aufnahmeelements angeordnet sind, sodass ein Zugriff auf die in dem ersten Aufnahmeelement aufgenommenen Steckverbindungen möglich ist, und dass in der zweiten Relativposition die Aufnahmepositionen (15) des zweiten Aufnahmeelements oberhalb der Aufnahmepositionen (14) des ersten Aufnahmeelements angeordnet sind, sodass ein Zugriff auf die in dem zweiten Aufnahmeelement aufgenommenen Steckverbindungen möglich ist.

7. Vorrichtung nach einem der Ansprüche 2 bis 6, **dadurch gekennzeichnet, dass** zwischen die Aufnahmepositionen (14, 15) jedes Aufnahmeelements (12, 13) schlitzartige Ausnehmungen (18) eingebracht sind, durch die zu den in dem jeweils anderen Aufnahmeelement aufgenommenen Steckverbindungen verführende Kabel leitbar sind.
